# EUROPEAN PATENT APPLICATION

(11) **EP 4 686 986 A1**
(43) Date of publication of application: **04.02.2026**
(21) Application number: 25192197.9
(22) Date of filing: 28.07.2025
(51) Int. Cl.: G05B 13/04, G05B 19/418, G06N 20/00

(54) **METHOD AND SYSTEM FOR PREDICTING CONTROL FACTORS FOR MANUFACTURING FACILITIES BASED ON MACHINE LEARNING**

(30) Priority: 30.07.2024 KR 20240101268
(71) Applicant: SAMSUNG SDI CO., LTD., Yongin-si, Gyeonggi-do 17084 (KR)
(72) Inventor: WOO, Hyungmin, Yongin-si, Gyeonggi-do 17084 (KR); RYU, Sang Hyun, Yongin-si, Gyeonggi-do 17084 (KR); RYU, Changhyun, Yongin-si, Gyeonggi-do 17084 (KR); JO, Hyeona, Yongin-si, Gyeonggi-do 17084 (KR); CHA, Sunghoon, Yongin-si, Gyeonggi-do 17084 (KR); SEO, Yongseok, Yongin-si, Gyeonggi-do 17084 (KR)
(74) Representative: Bardehle Pagenberg Partnerschaft mbB Patentanwälte Rechtsanwälte

(57) **Abstract**

A system for predicting control factors for a manufacturing facility, performed by at least one processor, includes: a model execution management unit configured to execute or manage one or more facility control factor prediction models trained to predict control factors for a manufacturing facility received from a prediction model providing system, a storage unit configured to store data associated with the facility control factor prediction models, and a communication unit configured to receive an independent factor of one of a plurality of manufacturing facilities from a facility control system, and configured to transmit a control factor predicted value calculated by one of the one or more facility control factor prediction models based on the independent factor to the facility control system.

## Description

### BACKGROUND

### 1. Field

Aspects of embodiments of the present disclosure relate to a method and system for predicting control factors for manufacturing facilities based on machine learning.

### 2. Description of the Related Art

The secondary battery manufacturing process generally consists of an electrode process, an assembly process, and a formation process, and various manufacturing facility devices such as a mixer, a coater, a pressurizer, a tab welder, an electrolyte filler, a degasser, or the like are used in each process. As each process requires or desires high precision and performance consistency in manufacturing facilities, maintaining optimal or suitable facility conditions at each process task is an important factor in determining the performance and quality of secondary batteries, which are the final products.

For example, secondary battery manufacturing processes have been operated in such a way that workers directly enter initial process conditions, and/or the like, into manufacturing facilities. According to this, there are problems that there is a possibility that process conditions may not be entered accurately due to the error, fatigue, and/or the like, of workers and that the quality of resulting products is greatly affected by the performance ability, skill, and experience of workers, making it difficult to ensure consistent quality. Further, process conditions can be changed in real-time at each task of the secondary battery manufacturing process, but because it is difficult to respond immediately to changes in process conditions if workers respond directly, there is a problem of production being interrupted or the rate of defective products getting higher.

The above information disclosed in this Background section is for enhancement of understanding of the background of the present disclosure, and therefore, it may contain information that does not constitute related (or prior) art.

### SUMMARY

According to the present invention, a system and a method for predicting control factors for a manufacturing facility as claimed in claims 1 and 13, and a computer-readable medium as defined in claim 15 are provided. Preferred embodiments of the invention are described in the dependent claims.

These and other aspects and features of the present disclosure will be described in or will be apparent from the following description of embodiments of the present disclosure.

According to some embodiments of the present disclosure, a system for predicting control factors for a manufacturing facility may be performed by at least one processor, the system may include: a model execution management unit configured to execute or manage one or more facility control factor prediction models trained to predict control factors for a manufacturing facility, the one or more facility control factor prediction models being received from a prediction model providing system; a storage unit configured to store data associated with the facility control factor prediction models; and a communication unit configured to receive an independent factor of one of a plurality of manufacturing facilities from a facility control system, and configured to transmit a control factor predicted value calculated by one of the one or more facility control factor prediction models based on the independent factor to the facility control system, wherein the model execution management unit may be configured to execute matching between one selected from the one or more facility control factor prediction models and one selected from the plurality of manufacturing facilities, and configured to calculate a control factor predicted value based on an independent factor of the selected manufacturing facility by executing the selected prediction model.

In some embodiments, a number of the one or more prediction models may be less than a number of the plurality of manufacturing facilities, and the model execution management unit executes matching between the one selected from the one or more prediction models and the one selected from the plurality of manufacturing facilities according to a set or predetermined matching criteria.

In some embodiments, the set or predetermined matching criteria may include at least one of a degree of association of a prediction model with a manufacturing facility, a degree of specialization of a prediction model for a manufacturing facility, information about control priority of a manufacturing facility, scheduling information of manufacturing facilities, or a regional proximity to a manufacturing facility.

In some embodiments, the independent factor may include at least one of condition derivation start information or basic information of the plurality of manufacturing facilities, the condition derivation start information may include at least one of facility number information or condition derivation start information, and the basic information may include at least one of factory information, a facility number, a recipe identification number, an item code, an item value, or data generation time information.

In some embodiments, the facility control system may include: an advanced process control (APC) server configured to determine a recipe parameter of one of the plurality of manufacturing facilities based on the control factor predicted value; and a machine control (MC) server configured to control an operation of one of the plurality of manufacturing facilities according to the recipe parameter.

In some embodiments, the MC server may be configured to receive the independent factor from at least one of the plurality of manufacturing facilities and/or transmit the independent factor to the control factor prediction system, by using a message-based communication protocol.

In some embodiments, the APC server may be configured to receive the control factor predicted value from the control factor prediction system by using a message-based communication protocol.

In some embodiments, the APC server may be configured to determine whether or not the control factor predicted value satisfies a recipe parameter of one of the plurality of manufacturing facilities; and transmit information on whether or not the control factor predicted value satisfies the recipe parameter to the MC server if determined that the control factor predicted value satisfies the recipe parameter.

In some embodiments, the APC server may be configured to transmit retraining instruction information to the MC server when the control factor predicted value is determined to not satisfy the recipe parameter, and the MC server may be configured to transmit a request for retraining of the prediction model to the control factor prediction system.

In some embodiments, the prediction model providing system may include: a model training unit configured to train the one or more prediction models to predict control factors for a manufacturing facility based on reference data on past recipe parameters of the plurality of manufacturing facilities and process execution results according to the past recipe parameters; and a model distribution unit configured to distribute the one or more prediction models to the control factor prediction system.

In some embodiments, the model distribution unit may be configured to distribute the one or more prediction models in a form of a Docker container executable on a virtual machine.

In some embodiments, the reference data may include at least one of process standard data, process message data, facility measurement data, or sensor measurement data.

According to some embodiments of the present disclosure, a method of predicting facility control factors may be performed by at least one processor, the method may include: receiving, from a prediction model providing system, one or more facility control factor prediction models trained to predict control factors for a manufacturing facility; executing a matching between one selected from the one or more facility control factor prediction models and one selected from a plurality of manufacturing facilities controlled by a facility control system; receiving an independent factor of the selected manufacturing facility from the facility control system; calculating a control factor predicted value based on the independent factor by using the selected facility control factor prediction model; and transmitting the control factor predicted value to the facility control system.

In some embodiments, a number of the one or more facility control factor prediction models may be less than a number of the plurality of manufacturing facilities, and the executing of the matching between the one selected from the one or more facility control factor prediction models and the one selected from the plurality of manufacturing facilities controlled by the facility control system may include: executing a matching between the one selected from the one or more prediction models and the one selected from the plurality of manufacturing facilities according to a set or predetermined matching criteria.

In some embodiments, the set or predetermined matching criteria may include at least one of a degree of association of a prediction model with a manufacturing facility, a degree of specialization of a prediction model for a manufacturing facility, information about control priority of a manufacturing facility, scheduling information of manufacturing facilities, or a regional proximity to a manufacturing facility.

In some embodiments, the method may further include: determining, by the facility control system, a recipe parameter of the selected manufacturing facility based on the control factor predicted value; and controlling, by the facility control system, an operation of the selected manufacturing facility according to the recipe parameter.

In some embodiments, the method may further include: determining, by the facility control system, whether or not the control factor predicted value satisfies the recipe parameter of the selected manufacturing facility.

In some embodiments, the receiving of the independent factor of the selected manufacturing facility from the facility control system may include: receiving the independent factor of the selected manufacturing facility from the facility control system by using a message-based communication protocol.

In some embodiments, the transmitting of the control factor predicted value to the facility control system may include: transmitting the control factor predicted value to the facility control system by using a message-based communication protocol.

According to some embodiments of the present disclosure, a computer program stored on a computer-readable recording medium may be configured to execute the method according to the embodiments disclosed herein on a computer.

According to some embodiments of the present disclosure, the process conditions of the manufacturing facilities used in the secondary battery manufacturing process can be derived in real-time using a machine learning model. For example, the method and system for predicting control factors can not only predict the manufacturing facility process conditions but also perform the role of detecting whether the manufacturing facilities are abnormal, thereby improving process quality and facility efficiency. Further, the method and system for predicting control factors can provide scalability that can integratedly manage the manufacturing facilities of the entire secondary battery manufacturing process, rather than targeting particular processes only.

According to some embodiments of the present disclosure, the system for predicting control factors can improve the accuracy of the control factor prediction by calculating a predicted value by considering independent factors associated with a particular manufacturing facility used in a particular process using a control factor prediction model. Further, the system for predicting control factors can prevent or reduce errors in the manufacturing facility process in advance because it verifies whether the calculated predicted value satisfies the recipe parameter before applying the predicted value to the manufacturing facility.

According to some embodiments of the present disclosure, by configuring the control factor prediction system and the facility control system based on a message-oriented architecture, message communication and control factor prediction can be performed in parallel and simultaneously as the control factor prediction system and the manufacturing facilities can exchange the independent factors that are input values of the prediction model and the predicted value that is an output value in the form of messages via a message queue.

According to some embodiments of the present disclosure, a process control system with high predicted value accuracy can be provided by matching a specialized prediction model to each of the manufacturing facilities. Further, if the number of the plurality of manufacturing facilities is greater than the number of the one or more prediction models, manufacturing factor prediction can be performed efficiently by matching the manufacturing facility and the prediction model according to set or predetermined criteria.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 shows an example of a secondary battery facility control factor prediction system using machine learning according to some embodiments of the present disclosure;
FIG. 2 is a block diagram showing an information processing system used to predict facility control factors using machine learning according to some embodiments of the present disclosure;
FIG. 3 is a block diagram showing an example of the prediction model providing system of the facility control factor using machine learning according to some embodiments of the present disclosure;
FIG. 4 is a block diagram showing a prediction system for a facility control factor using machine learning according to some embodiments of the present disclosure;
FIG. 5 is a diagram showing an example of a facility control factor prediction model execution management unit using machine learning according to some embodiments of the present disclosure;
FIG. 6 is a diagram showing an example of a facility control factor prediction system by a message-based communication protocol according to some embodiments of the present disclosure;
FIG. 7 is a diagram showing an example of a matching system between a plurality of manufacturing facilities and a plurality of prediction models according to some embodiments of the present disclosure;
FIG. 8 is a diagram showing an example of predicting control factors of a manufacturing facility according to some embodiments of the present disclosure;
FIG. 9 is a diagram showing an example of a case where a facility control factor recommended predicted value is determined to satisfy a recipe parameter according to some embodiments of the present disclosure;
FIG. 10 is a diagram showing an example of a case where it is determined that the facility control factor recommended predicted value does not satisfy the recipe parameter according to some embodiments of the present disclosure; and
FIG. 11 is a flowchart showing a method for predicting control factors based on machine learning according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her disclosure in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, a "machine learning model"' may include any model used to infer an answer to a given input. According to some embodiments, the machine learning model may include an artificial neural network model including an input layer, a plurality of hidden layers, and an output layer. Here, each layer may include a plurality of nodes. In the present disclosure, each of the plurality of machine learning models is described as a separate machine learning model, but is not limited thereto, and some or all of the plurality of machine learning models may be implemented in one machine learning model. Further, one machine learning model may include a plurality of machine learning models. In the present disclosure, the terms machine learning model and artificial neural network model may be used interchangeably to represent the same or similar models.

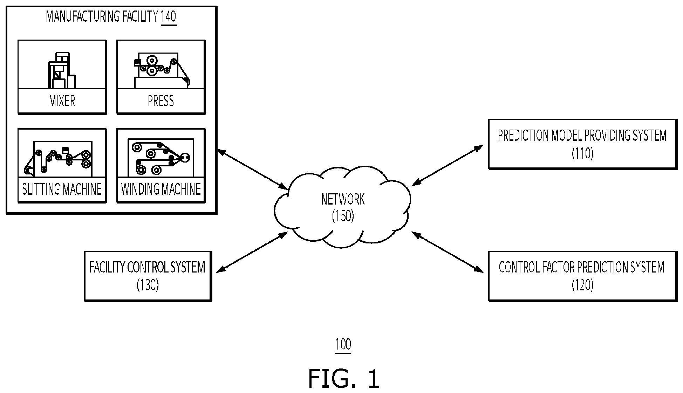

FIG. 1 shows an example of a secondary battery facility control factor prediction system 100 using machine learning according to some embodiments of the present disclosure. The secondary battery facility control factor prediction system 100 may include a prediction model providing system 110, a control factor prediction system 120, a facility control system 130, and a plurality of manufacturing facilities 140. Here, the prediction model providing system 110, the control factor prediction system 120, the facility control system 130, and the plurality of manufacturing facilities 140 may be connected to each other via a network 150. For example, the network 150 may be a wired or wireless network. In some examples, the network 150 may be a cloud network that is an infrastructure in which computing devices, storage devices, applications, and/or the like, required or desired for the prediction model providing system 110, the control factor prediction system 120, and the facility control system 130 to predict the control factors of the manufacturing facilities 140 and control the manufacturing process are interconnected, but is not limited thereto.

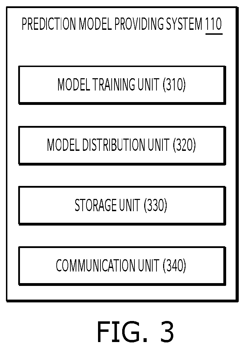

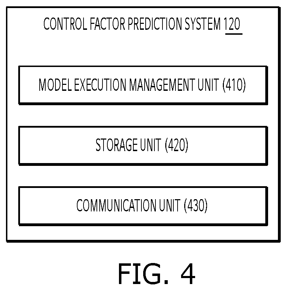

In some embodiments, the prediction model providing system 110 may receive reference data necessary or suitable for facility control factor prediction training from the plurality of manufacturing facilities 140 via the network 150. However, without being limited thereto, reference data may be collected or received from the plurality of manufacturing facilities 140 and stored in a separate database in advance, and the prediction model providing system 110 may receive the reference data from the corresponding database. Accordingly, the prediction model providing system 110 may train and generate a machine learning model that derives a facility control factor predicted value based on the received reference data. In some embodiments, the control factor prediction system 120 may receive one or more facility control factor prediction models trained to predict control factors for the manufacturing facilities 140 based on machine learning from the prediction model providing system 110 via the network 150. Here, the prediction model providing system 110 may convert the trained and generated facility control factor prediction model into a Docker image executable in a virtual environment by using a Docker container and may distribute it to the control factor prediction system 120. Here, more details of the configuration in which the control factor prediction system 120 receives the prediction model via the prediction model providing system 110 will be described later in reference to FIGS. 3 and 4.

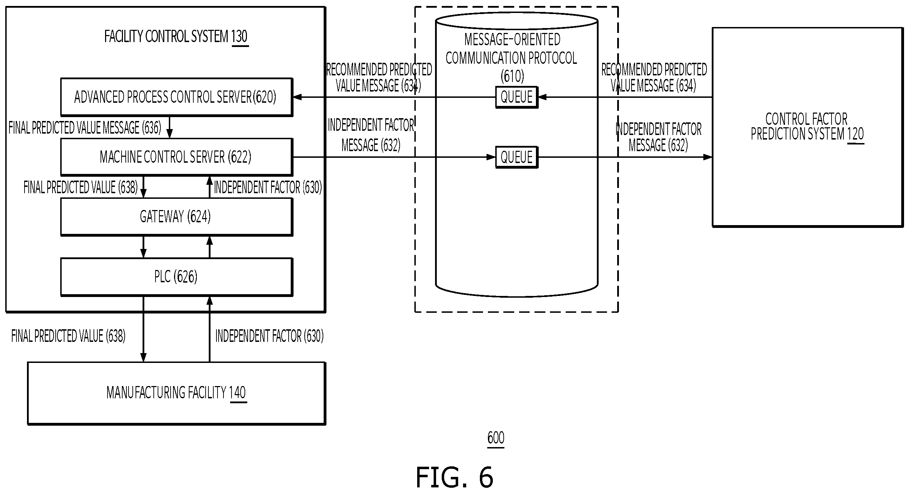

In some embodiments, the control factor prediction system 120 may receive independent factors of the manufacturing facilities as input values of the prediction model from the manufacturing facilities 140 by way of the facility control system 130 over the network 150. Here, the manufacturing facilities 140 are facilities used in one or more suitable processes in the secondary battery manufacturing process, and may include, but are not limited to, a mixer, a press machine, a slitting machine, a winding machine, or the like. Here, the control factor prediction system 120 and the facility control system 130 may be implemented based on a message-oriented architecture. Accordingly, the facility control system 130 may transmit the independent factors received from the manufacturing facilities 140 to a message queue as independent factor messages in the form of messages, and the control factor prediction system 120 may receive the independent factors in the form of messages via the message queue. A more detailed description of the configuration in which the control factor prediction system 120 and the facility control system 130 implemented based on the message-oriented architecture exchange data in the form of messages via a message-based communication protocol and message-oriented middleware will be provided later in in reference to FIG. 6.

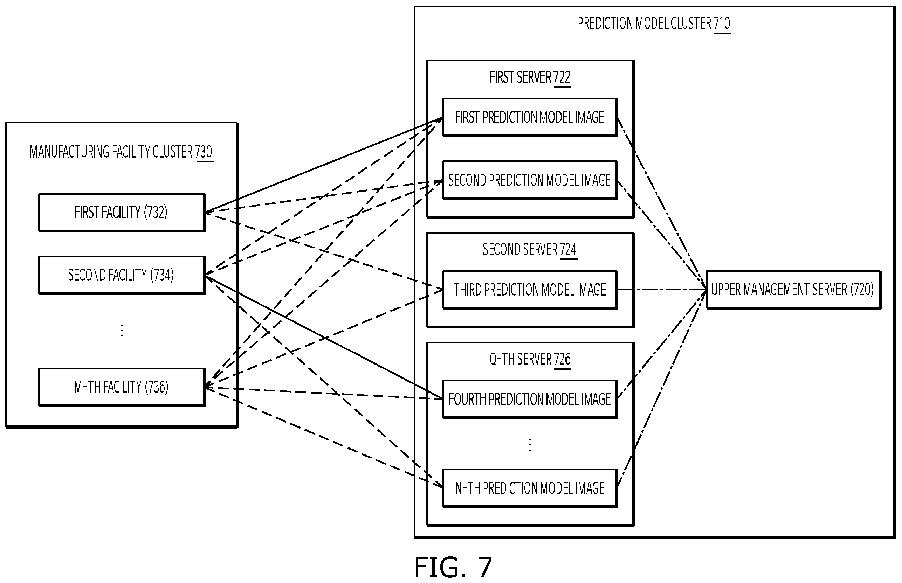

In some embodiments, the control factor prediction system 120 may select and match one of the plurality of manufacturing facilities 140 with one of the plurality of prediction models based on the independent factors received from the plurality of manufacturing facilities 140 and the plurality of prediction models received from the prediction model providing system 110. Further, the control factor prediction system 120 may execute the selected prediction model and calculate a predicted value requested by the selected manufacturing facility 140. Here, a more detailed description of the configuration in which the control factor prediction system 120 selects and matches one of the plurality of manufacturing facilities 140 with one of the plurality of prediction models will be provided later in reference to FIG. 7.

In some embodiments, the control factor prediction system 120 may transmit the calculated predicted value to the facility control system 130 via the network 150. Here, the facility control system 130 may receive a predicted value message in the form of a message via a message queue. Further, the facility control system 130 may determine whether the predicted value satisfies a recipe parameter and transmit the predicted value to the manufacturing facility 140 according to the determination result. The manufacturing facility 140 may apply the received predicted value as a facility control factor.

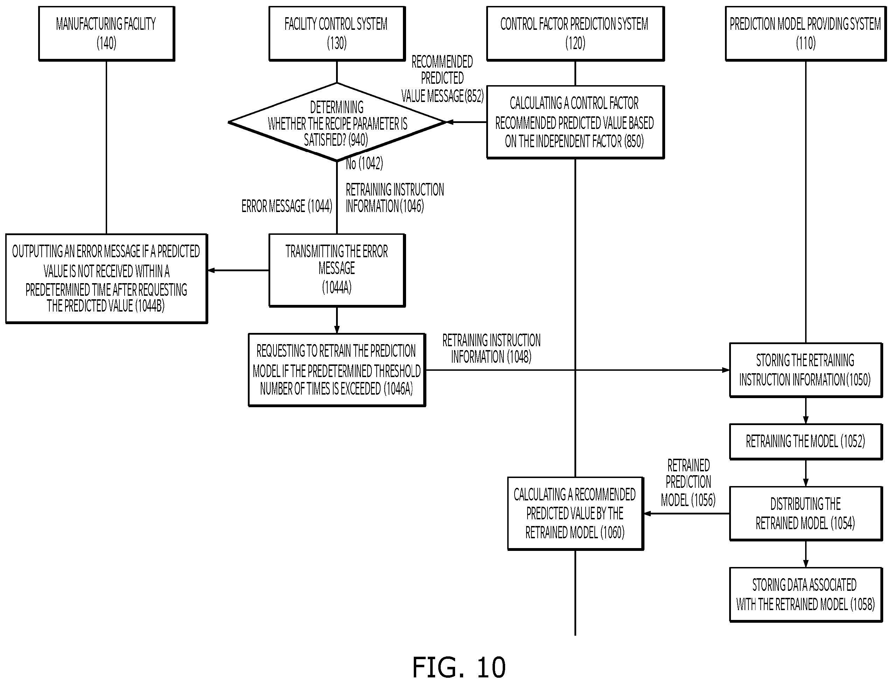

In some embodiments, the facility control system 130 may transmit an error message to the manufacturing facility 140 according to the result of determining whether the predicted value satisfies the recipe parameter. Further, the facility control system 130 may transmit retraining instruction information to the prediction model providing system 110 via the network 150. The prediction model providing system 110 may retrain a new facility control factor prediction model based on the retraining instruction information. Here, a more detailed description of the prediction model retraining will be provided later in reference to FIG. 10.

With this configuration, control factors that satisfy the process conditions of the manufacturing facilities 140 used in the secondary battery manufacturing process can be derived in real-time using the machine learning model. Accordingly, not only can the control factors that satisfy the process conditions of the manufacturing facilities 140 be predicted in real-time, but it is also possible to detect whether the manufacturing facilities 140 are operating abnormally, thereby improving the quality and facility efficiency of the secondary battery manufacturing process. Further, the plurality of manufacturing facilities 140 associated with the entire secondary battery manufacturing process can be integratedly managed, rather than targeting only particular processes of the secondary battery manufacturing processes.

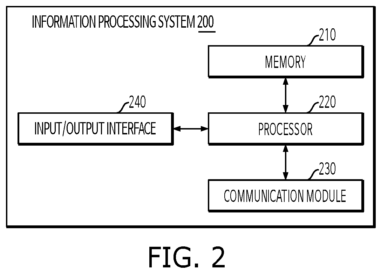

FIG. 2 is a block diagram showing an information processing system 200 used to predict facility control factors using machine learning according to some embodiments of the present disclosure. The information processing system 200 may correspond to, for example, at least one of the prediction model providing system 110, the control factor prediction system 120, or the facility control system 130 shown in FIG. 1. The information processing system 200 may include a memory 210, a processor 220, a communication module 230, and an input/output interface 240. Referring to FIG. 2, the information processing system 200 may be configured to communicate information and/or data over a network using the communication module 230. According to some embodiments, the information processing system 200 may be formed of at least one device including the memory 210, the processor 220, the communication module 230, or the input/output interface 240, but is not limited thereto.

The memory 210 may include any computer-readable medium including a non-transitory computer-readable recording medium. According to some embodiments, the memory 210 may include a permanent mass storage device, such as read-only memory (ROM), a disk drive, a solid-state drive (SSDs), flash memory, and/or the like. As another example, the permanent mass storage device, such as ROM, SSD, flash memory, a disk drive, and/or the like, may be included in the information processing system 200 as a separate persistent storage device distinct from the memory 210. Further, the memory 210 may store software components including an operating system and at least one program code (e.g., codes for generating and training a prediction model installed and run in the information processing system 200, matching the prediction model with a manufacturing facility, predicting control factors using the prediction model, and/or the like).

These software components may be loaded from a computer-readable recording medium separate from the memory 210. Such a separate computer-readable recording medium may include a recording medium directly connectable to the information processing system 200, and may include, for example, computer-readable recording media such as floppy drives, disks, tapes, DVD/CD-ROM drives, memory cards, and/or the like. As another example, the software components may be loaded into the memory 210 via the communication module 230 rather than computer-readable recording media. For example, at least one program may be loaded onto the memory 210 based on a computer program (e.g., programs for generating and training a prediction model, matching the prediction model with a manufacturing facility, predicting control factors using the prediction model, and/or the like) installed by files provided via the communication module 230 by developers or a file distribution system that distributes installation files of an application.

The processor 220 may be configured to process commands of computer programs by performing basic arithmetic, logic, and input/output operations. The commands may be provided to a user terminal or another external system by the memory 210 or the communication module 230. For example, the processor 220 may receive reference data from one or more manufacturing facilities and generate and train a prediction model based on the reference data, match a particular manufacturing facility with a particular prediction model, or receive a predicted value request and an independent factor from a particular manufacturing facility and calculate a control factor predicted value of the particular manufacturing facility by using the matched prediction model.

The communication module 230 may provide a configuration or function for the user terminal and the information processing system 200 to communicate with each other via a network, and may provide a configuration or function for the information processing system 200 to communicate with an external system (as one example, a separate cloud system, and/or the like). As one example, control signals, commands, data, and/or the like, provided under the control of the processor 220 of the information processing system 200 may be transmitted to the user terminal and/or the external system by way of the communication module 230 and the network via the communication module of the user terminal and/or the external system. For example, the facility control factor prediction model or the facility control factor predicted value generated by the information processing system 100 may be transmitted to the user terminal and/or the external system by way of the communication module 230 and the network via the communication module of the user terminal and/or the external system. Further, the user terminal and/or the external system that has received the predicted facility control factor information may output the received information via a display output-capable device.

Moreover, the input/output interface 240 of the information processing system 200 may be configured to interface with devices for input or output that may be connected to the information processing system 200 or that the information processing system 200 may include. In FIG. 2, the input/output interface 240 is shown as an element configured separately from the processor 220 but is not limited thereto, and the input/output interface 240 may be configured to be included in the processor 220. The information processing system 200 may include more components than those in FIG. 2. For example, the information processing system 200 may include components in addition to the memory 210, the processor 220, the communication module 230, and the input/output interface 240.

The processor 220 of the information processing system 200 may be configured to manage, process, and/or store information and/or data received from a plurality of user terminals and/or a plurality of external systems. According to some embodiments, the processor 220 may receive independent factors from the manufacturing facilities, a facility control factor prediction model (e.g., a container image executable on a virtual machine), and/or the like, from the user terminal and/or the external system. The processor 220 may calculate a predicted value of a facility control factor based on the independent factors using the prediction model, verify the calculated predicted value, and output the verified predicted value, and/or the like, via a display output-capable device connected to the information processing system 200.

FIG. 3 is a block diagram showing an example of the prediction model providing system 110 of the facility control factor using machine learning according to some embodiments of the present disclosure. The prediction model providing system 110 may include a model training unit 310, a model distribution unit 320, a storage unit 330, and a communication unit 340, but is not limited thereto.

In some embodiments, the model training unit 310 may train one or more prediction models to predict control factors for manufacturing facilities based on reference data that serves as a basis for training a model that predicts the control factors of the facilities used in a secondary battery manufacturing process. For example, the model training unit 310 may collect or receive reference data including past recipe parameters of a plurality of manufacturing facilities and process execution results according to the past recipe parameters, and classify the collected or received reference data into training data, verification data, or test data for a machine learning model. Further, the model training unit 310 may select a machine learning model suitable for predicting control factors for each facility, train the selected model based on the training data, and then verify the corresponding model using the verification data or test data.

In some embodiments, prior to training the machine learning model based on the reference data, the model training unit 310 may perform preprocessing tasks, such as synchronizing the time points of various reference data, making up for missing values of the reference data, or removing noise.

In some embodiments, the model training unit 310 may receive the reference data used for training the facility control factor prediction model directly from the plurality of manufacturing facilities, or may receive it from a database in which it has been collected or received and stored in advance from the manufacturing facilities. Here, the reference data may include pairs of independent factors and control factors associated with the independent factors used in the training task of the prediction model. A more detailed description of the independent factors will be provided later in reference to FIG. 6.

In some embodiments, the model distribution unit 320 may convert the facility control factor prediction model generated by the model training unit 310 into a program form executable on a virtual machine and distribute it to the control factor prediction system 120. For example, the model distribution unit 320 may convert the prediction model into a Docker container form executable on a virtual machine and distribute it. For example, the model distribution unit 320 may generate a Docker file by packaging the machine-trained control factor prediction model and libraries, frameworks, and/or the like, necessary or suitable for executing the corresponding prediction model into a container. Further, the model distribution unit 320 may generate a Docker image based on the Docker file and distribute or transmit it to the control factor prediction system, and/or the like, via the network. Through this configuration, there is an advantage that the facility control factor prediction model is independent of the various hardware environments and computing resource capacities of the control factor prediction system and can thus be provided in a consistent format and can be executable. Further, the Docker image is easy to manage in version, making it easy to roll back or update an image of a particular version of the prediction model. Moreover, by using a registry such as Docker Hub, the image of the prediction model can be managed centrally and distributed more easily to various servers as needed or desired. This prediction model providing system 110 can generate and provide a prediction model with high reliability and availability.

In some embodiments, the storage unit 330 may store information associated with the prediction model generated by the model training unit 310, the prediction model Docker image or Docker file generated by the model distribution unit 320, and/or the like. For example, the information associated with the prediction model may include reference data used to train the prediction model, and parameters of the prediction model trained based on the reference data (e.g., weight information of each layer of the prediction model, and/or the like). Further, the storage unit 330 may store information associated with retraining, received from the facility control system. A more detailed description of the retraining of the prediction model will be provided later in reference to FIG. 10.

In some embodiments, the prediction model providing system 110 may receive training data necessary or suitable for the model training unit 310 of the prediction model providing system 110 to train the facility control factor prediction model via the communication unit 340. For example, the prediction model providing system 110 may receive reference data transmitted by the facility control system via the communication unit 340. Further, the prediction model providing system 110 may receive reference data directly from the manufacturing facilities via the communication unit 340.

In some embodiments, the prediction model providing system 110 may be connected to the control factor prediction system via the communication unit 340. For example, the prediction model providing system 110 may transmit the prediction model, which has been generated by the model training unit 310 and converted into a program form executable on a virtual machine by the model distribution unit 320, to the control factor prediction system via the communication unit 340.

FIG. 4 is a block diagram showing a prediction system for a facility control factor using machine learning according to some embodiments of the present disclosure. The control factor prediction system 120 may include a model execution management unit 410, a storage unit 420, and a communication unit 430, but is not limited thereto.

In some embodiments, the model execution management unit 410 may execute or manage one or more facility control factor prediction models trained to predict control factors for manufacturing facilities, received from the prediction model providing system. For example, the model execution management unit 410 may receive the one or more facility control factor prediction models and may be configured to execute or manage one or more facility control factor predict models. Here, the model execution management unit 410 may receive a prediction model converted into a Docker container form executable on a virtual machine from the prediction model providing system 110 via the communication unit 430. Further, the model execution management unit 410 may match one of the plurality of manufacturing facilities with one of the one or more prediction models according to set or predetermined criteria.

In some embodiments, the storage unit 420 may store information associated with the control factor predicted value calculated using the prediction model based on the independent factors by the model execution management unit 410. Here, the information associated with the control factor predicted value may include information included in the independent factors corresponding to the input values of the prediction model, information associated with the prediction model, information on whether the control factor predicted value satisfies the recipe parameter, and/or the like.

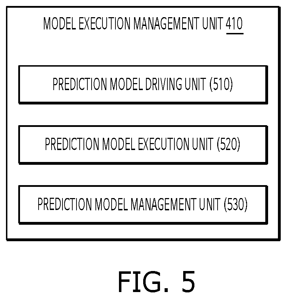

FIG. 5 is a diagram showing an example of a facility control factor prediction model execution management unit 410 using machine learning according to some embodiments of the present disclosure. The model execution management unit 410 may include a prediction model driving unit 510, a prediction model execution unit 520, and a prediction model management unit 530, but is not limited thereto.

In some embodiments, the prediction model driving unit 510 may set or include a hardware and/or software environment in which the prediction model received from the prediction model providing system can be executed. The prediction model may be received from the prediction model providing system after being converted into a Docker container form executable on a virtual machine. In this case, the prediction model driving unit 510 may drive a host operating system on which each of the prediction models provided in the form of a Docker container can be executed with its own isolated file system, network interface, and computing resources, and monitor the execution state.

In some embodiments, the prediction model execution unit 520 may receive independent factors including facility basic information transmitted by the manufacturing facilities from the facility control system, input them into the facility control factor prediction model executed (or waiting to be executed) by the prediction model driving unit 510, and cause the prediction model to calculate a control factor predicted value. Here, the prediction model execution unit 520 may determine the priority of the prediction model execution based on the information included in the independent factors.

In some embodiments, the prediction model management unit 530 may store and manage the distributed prediction model. For example, the prediction model management unit 530 may perform version updates and management of the distributed prediction model. As will be described in more detail later, the prediction model may be retrained based on control factor values predicted for the independent factors received from the matched manufacturing facility. As the prediction model is retrained, the history information of the previous version and the version after the retraining of the prediction model may be stored and managed.

FIG. 6 is a diagram showing an example of a facility control factor prediction system 600 by a message-based communication protocol according to some embodiments of the present disclosure. In some embodiments, instead of directly receiving the independent factors for deriving the control factor predicted value from the manufacturing facilities 140, the control factor prediction system 120 may indirectly receive them via the facility control system 130 based on a message-oriented architecture.

In the present disclosure, the "message-oriented architecture (MOA)" may refer to one of the system design methods in which data exchange between computer systems is performed via messages. Each component of the message-oriented architecture may operate independently while sending and receiving necessary or suitable data via messages, regardless of the state or location of other components. For example, the flexibility and scalability of the system can be maximized or improved through loose coupling between components.

Messages may be delivered asynchronously between each component of the message-oriented architecture. For example, after one component sends a message, it can perform the next task without waiting for a response from the other component. Further, messages may be managed using a message queue in the message-oriented architecture, and the message queue may also store and transfer the communication history between the sender and receiver of each of the messages. Accordingly, the system efficiency can be increased, bottlenecks can be reduced, system maintenance and scale-up can be facilitated, and interoperability between one or more suitable services can be improved.

The message-oriented architecture may be implemented by message-oriented middleware (MOM), a message-oriented communication protocol, and/or the like. The message-oriented communication protocol may correspond to a rule or format used to exchange messages via a message-based message queue. For example, the Highway101 communication protocol may be used out of one or more suitable message-oriented communication protocols. The message-oriented middleware may perform the role of managing message transmission and reception between each component of the message-oriented architecture according to the message-oriented communication protocol. For example, it may perform message queuing, message routing, transaction management, and/or the like. For example, the message-oriented middleware may receive data from a data producer and convert it into a message form or receive a message from a message sender and store it in a message queue, and deliver the message when an appropriate recipient for that message is ready to receive it, but perform the function of processing message transmission and reception in a transaction unit.

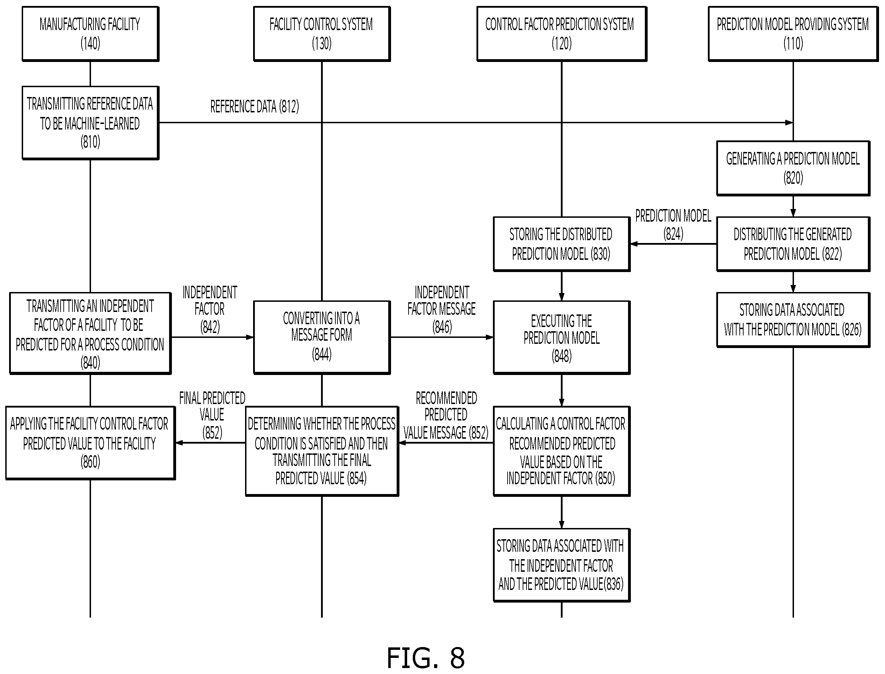

Referring to FIG. 6, the control factor prediction system 120 and the facility control system 130 may be designed and constructed to be able to communicate based on a message-oriented architecture. In some embodiments, the facility control system 130 may include an advanced process control (APC) server 620, a machine control (MC) server 622, a gateway 624, and a programmable logic control (PLC) 626, but is not limited thereto. Here, the advanced process control server 620 and the machine control server 622 may each include components or functions corresponding to the message-oriented middleware. The machine control server 622 may receive independent factors 630 from at least one of the plurality of manufacturing facilities 140 or transmit the independent factors 630 to the control factor prediction system 120, by using a message-based communication protocol 610. The advanced process control server 620 may receive a control factor predicted value from the control factor prediction system 120 using the message-based communication protocol 610, and determine a recipe parameter of one of the plurality of manufacturing facilities 140 based on the control factor predicted value. Further, the advanced process control server 620 may determine whether the control factor predicted value satisfies the recipe parameter by comparing the received control factor predicted value with the determined recipe parameter, and transmit the control factor predicted value to the machine control according to the determination result. Accordingly, the machine control server 622 may control the operation of one of the plurality of manufacturing facilities 140 based on the predicted value and the recipe parameter. A more detailed description of the content of the advanced process control server 620 determining whether the received control factor predicted value satisfies the recipe parameter will be provided later in reference to FIGS. 8 to 10.

In some embodiments, the facility control system 130 may receive independent factors corresponding to input values of the control factor prediction model from the manufacturing facilities 140. However, without being limited thereto, the facility control system 130 may receive independent factors from a database in which independent factors have been received and accumulated in advance from each of the plurality of manufacturing facilities 140. For example, the facility control system 130 may receive (e.g., directly receive) the independent factors 630 from the manufacturing facilities 140, or may receive location information of the independent factors 630 in the database from the manufacturing facilities 140 and receive the independent factors 630 corresponding to the location information from the database.

In some embodiments, the independent factors 630 may include condition derivation start information and facility basic information. For example, the condition derivation start information may be information indicating "which facility number requests a manufacturing facility control factor predicted value and when the request is made." In this case, the condition derivation start information may include facility number information and process condition derivation start information (e.g., time information at which the predicted value was requested), and may correspond to information that instructs the control factor prediction system 120 to prepare to execute the control factor prediction model. Further, the facility basic information may be information that, for example, indicates that "a particular facility used in a particular process during a secondary battery manufacturing process as a particular facility in a factory at a certain location wants a predicted value for a particular process facility condition or control factor that satisfies a particular recipe parameter." In this case, the facility basic information may include factory information (information on the factory where the particular facility that has requested the predicted value is located), a facility number (information on the particular facility that has requested the predicted value), lot information (LOT ID, identification information on materials used in the particular facility), recipe parameter information (specification that serves as the recipe parameters or process criteria of the particular facility), an item code (e.g., item names such as the thickness of secondary battery electrode plates, and/or the like), an item value (e.g., a numerical value for each item, such as the measured thickness values of the secondary battery electrode plates, and/or the like), a data generation time (time information at which the item value was measured), and/or the like. Such information may correspond to input value information necessary or suitable for the control factor prediction system 120 to calculate a predicted value via the control factor prediction model. For example, these independent factors may be used as criteria for the control factor prediction system 120 to match one of the plurality of prediction models with one of the plurality of manufacturing facilities 140. A more detailed description of an example in which the independent factors 630 are used as matching criteria will be provided later in reference to FIG. 7.

In some embodiments, the independent factors 630 transmitted from the manufacturing facilities 140 to the facility control system 130 may be transmitted to the machine control server 622 that acts as message-oriented middleware via the PLC 626 and the gateway 624. Here, the PLC 626 may collect or receive reference data for each of the manufacturing facilities 140 used as training data in the prediction model generation task, the independent factors 630 for each of the manufacturing facilities 140 used as input data in the prediction model execution/management task, and/or the like. Further, the PLC 626 may function to control the manufacturing facilities 140 using the predicted value calculated by the prediction model, or perform data format conversion and preprocessing, such as converting collected or received analog signals into digital data or converting received digital data into analog signals. In some embodiments, the gateway 624 may convert the data collected or received by the PLC 626 into a format that can be understood by the machine control server 622 functioning as message-oriented middleware, and transmit it.

In some embodiments, the machine control server 622 may receive independent factors 630 in one or more suitable formats from the gateway 624 and convert them into independent factor messages 632 in a message format. Further, the machine control server 622 may store the converted independent factor messages 632 in a message queue. In this case, the machine control server 622 may store information on a prediction model that will receive the independent factor message 632 in the message queue together with the corresponding independent factor message 632 according to the matching result between one of the plurality of prediction models and one of the plurality of manufacturing facilities 140. Accordingly, by allowing only a particular prediction model that matches the information on the prediction model stored in the message queue out of the plurality of prediction models to receive the corresponding independent factor message 632, consistency and integrity can be maintained in the data transmission process.

In some embodiments, each of the message queues may include not only the independent factor message 632 transmitted from the machine control server 622, but also the time information at which the corresponding independent factor message 632 was stored, information on the prediction model that will receive the corresponding independent factor message 632, other messages linked to the corresponding independent factor message 632, and/or the like. Accordingly, by the priority information, scheduling information, matched prediction model information, and other associated message information of each of the plurality of messages stored in the queue, the prediction model of the control factor prediction system 120 can receive the corresponding message without unnecessary or undesirable loss of time, and calculate and transmit a predicted value in real-time within the time requested by each of the manufacturing facilities 140.

In some embodiments, the control factor prediction system 120 may receive the independent factor message 632 from the message queue, input it into the facility control factor prediction model, and calculate a control factor predicted value. Here, the communication unit (430 in FIG. 4) of the control factor prediction system 120 may receive the independent factor message 632 from the message queue and convert it into an input value format of the facility control factor prediction model. Further, the communication unit (430 in FIG. 4) of the control factor prediction system 120 may convert the predicted value calculated by the facility control factor prediction model from the model execution management unit (410 in FIG. 4) into a predicted value message 634 in the form of a message for storage in the message queue.

In some embodiments, the advanced process control server 620 of the facility control system 130 may receive the predicted value message 634 stored in the message queue. The advanced process control server 620 may compare the received predicted value message 634 with the recipe parameter of a target facility (e.g., a manufacturing facility 140 associated with an independent factor corresponding to an input value corresponding to the corresponding predicted value or a manufacturing facility 140 matched with a prediction model that has calculated the corresponding predicted value), and determine whether the predicted value satisfies the recipe parameter. Further, the advanced process control server 620 may transmit the predicted value that satisfies the recipe parameter to the machine control server 622. Here, the predicted value (or predicted value message) calculated by the prediction model of the control factor prediction system 120 may include a recommended predicted value (or a recommended predicted value message 634) and a final predicted value (or a final predicted value message 636). The recommended predicted value may refer to a predicted value calculated actually by the prediction model. Moreover, the final predicted value is a predicted value that has been determined by the advanced process control server 620 to satisfy the recipe parameter among the recommended predicted values, and may refer to a predicted value that is transmitted to the manufacturing facility 140 via the machine control server 622 and is actually applied to the manufacturing facility 140.

In some embodiments, the machine control server 622 may receive the final predicted value message 636 in a message format from the advanced process control server 620 and convert it into a final predicted value 638 in a format recognizable by the gateway 624. Further, the machine control server 622 may control the manufacturing facility 140 according to the final predicted value 638 by transmitting the final predicted value 638 to the manufacturing facility 140 via the gateway 624 and the PLC 626. Moreover, the machine control server 622 may also perform the role of requesting confirmation information of receipt of the final predicted value 638 from the manufacturing facility 140, receiving confirmation information of receipt of the final predicted value 638 from the manufacturing facility 140, or receiving information obtained by measuring the work environment information of the manufacturing facility 140 and checking whether the final predicted value 638 has been successfully transmitted to the corresponding facility.

With this configuration, the control factor prediction system 120 can improve the accuracy of the control factor prediction by calculating the predicted value via the control factor prediction model by considering the independent factors associated with a particular manufacturing facility 140 used in a particular process. Further, by checking via the advanced process server whether the predicted value satisfies the recipe parameter required by the corresponding manufacturing facility 140 and then applying it instead of applying the calculated predicted value directly to the manufacturing facility 140, errors in the manufacturing facility process can be prevented or reduced in advance. Moreover, by configuring the control factor prediction system 120 and the facility control system 130 based on a message-oriented architecture, it is possible to provide a distributed system that can perform message communication and control factor prediction in parallel and simultaneously as the control factor prediction system 120 and the manufacturing facilities 140 can exchange the independent factors that are input values of the prediction model and the predicted value that is an output value in the form of messages via a message queue instead of directly transmitting and receiving them.

FIG. 7 is a diagram showing an example of a matching system between a plurality of manufacturing facilities and a plurality of prediction models according to some embodiments of the present disclosure. Any one of a plurality of manufacturing facilities 732, 734, and 736 included in a manufacturing facility cluster 730 may be matched with any one of one or more facility control factor prediction models executed by at least one or more servers 722, 724, and 726 included in a prediction model cluster 710. Here, the prediction model cluster 710 may include an upper management server 720 that integratedly manages a plurality of prediction models. Further, the manufacturing facility cluster 730 may correspond to the plurality of manufacturing facilities 140 described with reference to FIGS. 1 to 6, and the prediction model cluster 710 may correspond to one or more prediction models executed or managed by the control factor prediction system 120 described with reference to FIGS. 1 to 6.

In some embodiments, the control factor prediction system may execute matching between one selected from the plurality of manufacturing facilities 732, 734, and 736 included in the manufacturing facility cluster 730 and one selected from the facility control factor prediction models included in the prediction model cluster 710. Here, the number of the plurality of manufacturing facilities 732, 734, and 736 included in the manufacturing facility cluster 730 may be less than, equal to, or greater than the number of prediction models included in the prediction model cluster 710. Further, such matching may be performed by the upper management server 720 that integratedly manages at least one or more servers including the plurality of prediction models, and the upper management server 720 may be included in the control factor prediction system or may be present separately outside the control factor prediction system.

In some embodiments, the control factor prediction system may execute matching according to set or predetermined criteria. Here, the set or predetermined criteria may include at least one of a degree of association of a prediction model with a manufacturing facility, a degree of specialization of a prediction model for a manufacturing facility, control priority information of manufacturing facilities, scheduling information of manufacturing facilities, regional proximity to a manufacturing facility, or predicted value history information of a prediction model. In some embodiments, the control factor prediction system may match a prediction model that is currently on standby or is not running with a manufacturing facility that requests a predicted value, depending on whether each of the plurality of prediction models is running or being executed in real-time. Further, the control factor prediction system may determine scheduling information of the manufacturing facilities, control priority information of the manufacturing facilities, regional proximity of each of the manufacturing facilities, and/or the like, based on the independent factors received from each of the plurality of manufacturing facilities 732, 734, and 736. For example, the control factor prediction system may determine the regional relevance and temporal relevance of the plurality of manufacturing facilities 732, 734, and 736 that request predicted values in real-time according to factory information, facility number information, and/or the like, out of the independent factors, and may group regionally related manufacturing facilities into one set and match them with the prediction models, or match temporally related manufacturing facilities with the prediction models in sequence. For example, when the number of prediction models that can be currently processed is less than the number of manufacturing facilities that request the predicted values, the control factor prediction system may accept predicted value requests from the manufacturing facilities used in earlier processes before predicted value requests from the manufacturing facilities used in later processes in time and match them. Moreover, the control factor prediction system may match the prediction models according to temporal information at which each manufacturing facility has requested a predicted value based on the condition derivation start information of a particular process facility (e.g., a press facility) out of the condition derivation start information transmitted by each of the manufacturing facilities.

In some embodiments, the control factor prediction system may analyze the history of whether the predicted values calculated in the past have satisfied the recipe parameter, and/or the like, as predicted value history information of each of the plurality of prediction models. Further, the control factor prediction system may determine which prediction model has higher accuracy for which predicted value request of which manufacturing facility used in which manufacturing process. Accordingly, when there is a plurality of prediction models that can be matched with a particular manufacturing facility used in a particular manufacturing process that requests a particular predicted value, the control factor prediction system may match a prediction model having higher predicted value accuracy for each of the plurality of prediction models for the particular manufacturing process, the particular manufacturing facility, and the particular predicted value.

In some embodiments, the control factor prediction system may cause each of the plurality of prediction models to receive independent factors, and/or the like, transmitted by the manufacturing facilities and calculate a predicted value, respectively, in response to a request from a particular manufacturing facility that requests a particular predicted value. Further, the control factor prediction system may compare each of the predicted values with each other, and provide a predicted value that better satisfies the recipe parameter of the particular manufacturing facility out of the plurality of predicted values to the manufacturing facility.

In some embodiments, the control factor prediction system may cause the plurality of prediction models to collaborate to calculate a single predicted value in response to a request from a particular manufacturing facility that requests a particular predicted value. For example, the control factor prediction system may divide a plurality of independent factors received from the manufacturing facility, input them into the plurality of prediction models, calculate a predicted value, respectively, and then determine an average of the plurality of calculated predicted values as one predicted value requested by the corresponding manufacturing facility.

For example, referring to FIG. 7, the manufacturing facility cluster 730 may include a first facility 732, a second facility 734 to an M-th facility 736, and the prediction model cluster 710 may include a first prediction model and a second prediction model running on a first server 722, a third prediction model running on a second server 724, and a fourth prediction model to an N-th prediction model running on a third server 726. Here, each prediction model may correspond to a prediction model Docker image running in a virtual environment of each server. Here, M, the total number of manufacturing facilities, may be equal to, less than, or greater than N, the total number of prediction models.

The upper management server 720 or the control factor prediction system may analyze independent factor information for each of the first facility 732 and the second facility 734 to the M-th facility 736 that request the current predicted value, the predicted value history information of each of the plurality of prediction facilities currently on standby to be matched, and/or the like. If the first facility 732 and the second facility 734 correspond to a high priority compared to the rest of the manufacturing facilities or if the first facility 732 and the second facility 734 are used for earlier processes in the manufacturing process and the rest of the facilities are associated with later processes, the first facility 732 or the second facility 734 may be matched with a prediction model before the rest of the manufacturing facilities. Further, if the predicted value calculated by the first prediction model in the past has been more accurate than the output value of the fourth prediction model in relation to a particular predicted value requested by the first facility 732, then the first facility 732 and the first prediction model may be matched. In contrast, if the fourth prediction model is more specialized in relation to a particular request value requested by the second facility 734, the second facility 734 and the fourth prediction model may be matched.

Through this configuration, a system with high predicted value accuracy can be provided by matching a specialized prediction model to each of the manufacturing facilities. Further, if the number of the plurality of manufacturing facilities is greater than the number of the one or more prediction models, a system capable of efficiently performing manufacturing factor prediction can be provided by matching the manufacturing facilities with the prediction models by considering one or more suitable criteria.

FIG. 8 is a diagram showing an example of predicting control factors of a manufacturing facility 140 according to some embodiments of the present disclosure. In some embodiments, a system for predicting control factors of the manufacturing facility 140 may include the manufacturing facility 140, a facility control system 130, a control factor prediction system 120, and a prediction model providing system 110, but is not limited thereto.

In some embodiments, the manufacturing facility 140 may transmit reference data as training data used by the prediction model providing system 110 to train a facility control factor prediction model and verification data for verifying the trained prediction model (810). Here, the reference data may include at least one of process standard data, process message data, facility measurement data, or sensor measurement data.

In some embodiments, the prediction model providing system 110 may train and generate a facility control factor prediction model using the reference data received from the manufacturing facility 140 (820). Further, the prediction model providing system 110 may distribute the generated facility control factor prediction model 824 to the control factor prediction system 120 (822), and store data associated with the generated facility control factor prediction model in a storage unit (826). Here, the prediction model providing system 110 may convert the generated prediction model

824 into an image executable in a virtual environment to generate a Docker container, and distribute it to the control factor prediction system 120. However, without being limited thereto, the prediction model providing system 110 may store data associated with the prediction model in the storage unit after generating the prediction model, and then transmit the prediction model from the storage unit to the control factor prediction system 120 when the manufacturing facility 140 requests a predicted value.

In some embodiments, the control factor prediction system 120 may receive the facility control factor prediction model from the prediction model providing system 110 and store it in the storage unit (830). Then, the control factor prediction system 120, when it receives a request for a facility control factor predicted value from the manufacturing facility 140, may set a hardware or software environment for executing a particular prediction model stored in the storage unit and receive an independent factor, which is an input value necessary or suitable to calculate a predicted value, from the manufacturing facility 140.

In some embodiments, the manufacturing facility 140 may transmit a request for a facility control factor predicted value or an independent factor including data for calculating a predicted value to the facility control system 130 (840). However, the manufacturing facility 140 may directly transmit the independent factor information to the facility control system 130 but is not limited thereto, information associated with independent factors may be stored in a database in advance from each of the plurality of manufacturing facilities 140, and then each of the manufacturing facilities 140 may transmit information on the location of the independent factors necessary or suitable to calculate a particular predicted value in the corresponding database to the facility control system 130, so that the facility control system 130 may receive the independent factor information from the database.

In some embodiments, the facility control system 130 may be designed based on a message-oriented architecture, and convert an independent factor 842 into an independent factor message in the form of a message (844) when it receives the independent factor from the manufacturing facility 140 or the database. Then, the facility control system 130 may transmit the independent factor message 846 to the control factor prediction system 120 using a message queue.

In some embodiments, the control factor prediction system 120 may be designed based on a message-oriented architecture as with the facility control system 130, and receive the independent factor message 846 from the facility control system 130 via the message queue, and convert the independent factor message in the form of a message into a form recognizable by the prediction model.

In some embodiments, the control factor prediction system 120 may select and execute a set or particular facility control factor prediction model from the storage unit (848). Here, the control factor prediction system 120 may analyze the independent factor received from the manufacturing facility 140 via the facility control system 130, and match a prediction model suitable for calculating a predicted value requested by the corresponding manufacturing facility 140 and the corresponding manufacturing facility 140 according to set or predetermined criteria.

In some embodiments, the control factor prediction system 120 may input the independent factor into the corresponding prediction model and calculate a control factor recommended predicted value (850). Then, the control factor prediction system 120 may convert the calculated recommended predicted value 852 into a recommended predicted value message in the form of a message and transmit it to the facility control system 130 via a message queue. Further, the control factor prediction system 120 may store data associated with the independent factor and the recommended predicted value in the storage unit (836). Here, the storage unit in which the control factor prediction system 120 stores the data associated with the independent factor and the recommended predicted value calculated based on the independent factor and the storage unit that stores the data associated with the prediction model trained and generated by the prediction model providing system 110 may be the same or different.

In some embodiments, the facility control system 130 may receive the recommended predicted value message from the control factor prediction system 120 via a message queue, and determine whether the corresponding recommended predicted value satisfies the recipe parameter and transmit a final predicted value to the manufacturing facility 140 according to the determination result (854). Here, the facility control system 130 may convert the predicted value message in the form of a message into a form recognizable by the manufacturing facility 140 and transmit it.

In some embodiments, the manufacturing facility 140 may receive the final predicted value 852 from the facility control system 130 and apply the corresponding facility control factor predicted value to the facility.

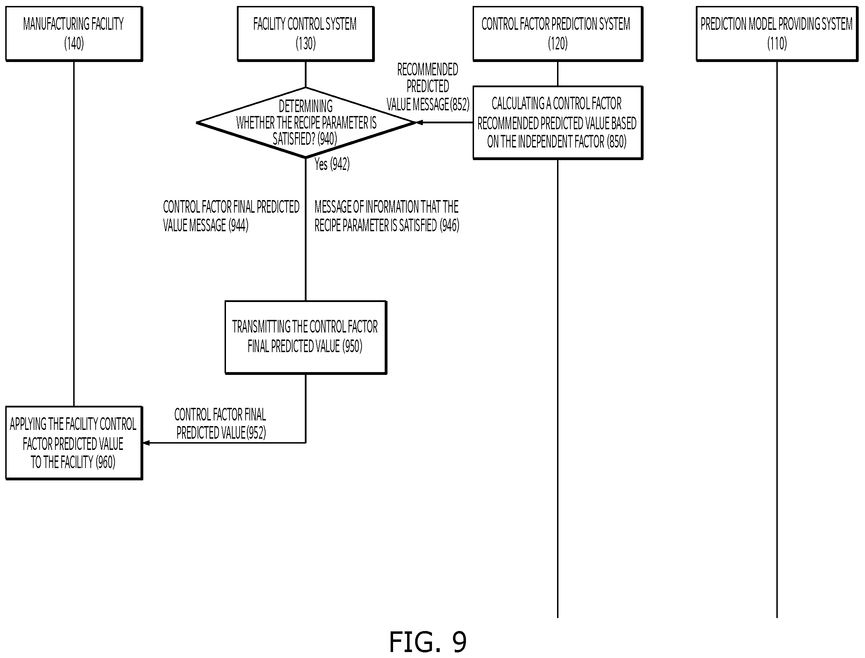

FIGS. 9 and 10 are diagrams showing examples of determining whether a facility control factor recommended predicted value satisfies a recipe parameter according to some embodiments of the present disclosure.

FIG. 9 is a diagram showing an example of a case where a facility control factor recommended predicted value is determined to satisfy a recipe parameter according to some embodiments of the present disclosure.

In some embodiments, the control factor prediction system 120 may calculate a control factor recommended predicted value using a prediction model matched with a corresponding manufacturing facility 140 based on an independent factor received from the manufacturing facility 140 via the facility control system 130

(850). Then, the control factor prediction system 120 may convert the calculated recommended predicted value into a recommended predicted value message 852 in the form of a message and transmit it to the facility control system 130 via a message queue. Then, the facility control system 130 may determine whether the received recommended predicted value satisfies the recipe parameter (940). Here, the determination of whether the received recommended predicted value satisfies the recipe parameter may be performed by the advanced process control server (620 in FIG. 6) of the facility control system 130.

In some embodiments, if it is determined that the received recommended predicted value satisfies the recipe parameter as a result of determining by the advanced process control server (942), the advanced process control server (620 in FIG. 6) may transmit a corresponding control factor final predicted value message 944 and a message 946 containing information that the corresponding control factor final predicted value satisfies the recipe parameter to the machine control server (622 in FIG. 6) of the facility control system 130. Here, the final predicted value message 944 may correspond to the recommended predicted value message 852 received from the control factor prediction system 120 that has been determined to satisfy the recipe parameter.

In some embodiments, the machine control server (622 in FIG. 6) may convert the control factor final predicted value message received from the advanced process control server into a final predicted value in a form recognizable by the manufacturing facility 140 and transmit the final predicted value to the manufacturing facility 140 (950). Here, the final predicted value may be the same as the recommended predicted value calculated by the control factor prediction system 120 via the prediction model. Then, the manufacturing facility 140 may apply the control factor final predicted value received from the facility control system 130 to the facility (960).

FIG. 10 is a diagram showing an example of a case where it is determined that the facility control factor recommended predicted value does not satisfy the recipe parameter according to some embodiments of the present disclosure.

In some embodiments, the control factor prediction system 120 may calculate a control factor recommended predicted value using a prediction model matched with a corresponding manufacturing facility 140 based on an independent factor received from the manufacturing facility 140 via the facility control system 130

(850). Then, the control factor prediction system 120 may convert the calculated recommended predicted value into a recommended predicted value message 852 in the form of a message and transmit it to the facility control system 130 via a message queue. Then, the facility control system 130 may determine whether the received recommended predicted value satisfies the recipe parameter (940). Here, the determination of whether the received recommended predicted value satisfies the recipe parameter may be performed by the advanced process control server (620 in FIG. 6) of the facility control system 130.

In some embodiments, if it is determined that the received recommended predicted value does not satisfy the recipe parameter as a result of determining by the advanced process control server (1042), the advanced process control server (620 in FIG. 6) may transmit an error message 1044 containing information that the corresponding control factor final predicted value does not satisfy the recipe parameter or retraining instruction information 1046 requesting the prediction model providing system 110 to retrain to the machine control server (622 in FIG. 6) of the facility control system 130.

In some embodiments, if the machine control server (622 in FIG. 6) receives the error message 1044 from the advanced process control server (620 in FIG. 6), it may transmit the error message to the manufacturing facility 140 as a meaning that the recommended predicted value currently calculated by the prediction model of the control factor prediction system 120 cannot be applied to the facility (1044A). In some embodiments, if the machine control server (622 in FIG. 6) receives the error message 1044 from the advanced process control server (620 in FIG. 6), the machine control server may not respond separately to the manufacturing facility 140. Accordingly, if the manufacturing facility 140 fails to receive a predicted value from the facility control system 130 within a set or predetermined threshold time after requesting the predicted value, it may output an error message (1044B). Here, whether the manufacturing facility 140 has received the predicted value from the facility control system 130 within the set or predetermined threshold time after requesting the predicted value may be determined based on condition derivation start information (predicted value request time information), which is an independent factor transmitted by the manufacturing facility 140. This may be determined based on whether the manufacturing facility 140 has received the final predicted value from the facility control system 130 within a set or predetermined threshold time from the time of requesting to provide the predicted value.

In some embodiments, the machine control server (622 in FIG. 6) may receive the retraining instruction information 1046 from the advanced process control server (620 in FIG. 6). Here, the retraining instruction information may include prediction history information, such as the independent factors that have been transmitted by the manufacturing facility 140, the facility control factor prediction models that have been used by the control factor prediction system 120, the recommended predicted values that have been calculated by the corresponding prediction model, and the recipe parameters that have been compared and determined by the advanced process control server. The machine control server may request the prediction model providing system 110 to retrain the facility control factor prediction model again by considering this prediction history information. However, in consideration of system overload, the machine control server (622 in FIG. 6) may request the prediction model providing system 110 to retrain the prediction model (1046A) only when the cumulative number of times that the predicted value calculated by the control factor prediction system 120 does not satisfy the recipe parameter exceeds a set or predetermined threshold number of times.

In some embodiments, if the prediction model providing system 110 receives retraining instruction information 1048 from the facility control system 130, the prediction model providing system 110 may first store the retraining instruction information in the storage unit (1050). Further, the prediction model providing system 110 may retrain the facility control factor prediction model based on the stored retraining instruction information (1052). Then, the prediction model providing system 110 may distribute the retrained prediction model to the control factor prediction system 120 (1054) and store data associated with the retrained prediction model in the storage unit (1058). Here, FIG. 10 is shown in the order of distributing the retrained prediction model of the prediction model providing system 110 and then storing the data associated with the retrained prediction model, but the present disclosure is not limited thereto. For example, the prediction model providing system 110 may first store the data associated with the retrained prediction model in the storage unit after retraining the prediction model, and then distribute the retrained prediction model to the control factor prediction system 120.

In some embodiments, the control factor prediction system 120 may receive the retrained prediction model 1056 from the prediction model providing system 110. Further, the control factor prediction system 120 may calculate a new recommended predicted value using the prediction model retrained based on the independent factors received from the manufacturing facility 140 (1060).

Through this configuration, by double-checking whether the predicted value calculated by the machine learning model satisfies the recipe parameter required or desired by the manufacturing facility 140, it is possible to prevent or reduce errors in advance in which inappropriate or unsuitable process facility conditions are incorrectly input to the manufacturing facility 140 and ensure or improve consistent quality. Further, a prediction model with improved accuracy can be provided by retraining the prediction model using the predicted value history information. Through this, the efficiency and stability of the manufacturing process can be maximized or improved.

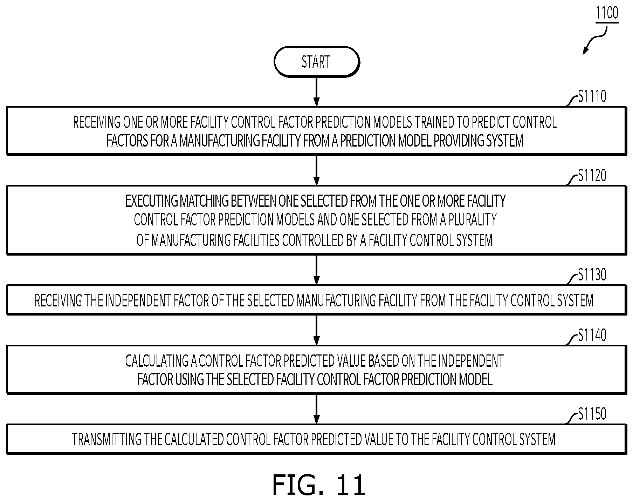

FIG. 11 is a flowchart 1100 showing a method for predicting control factors based on machine learning according to some embodiments of the present disclosure. In some embodiments, the method for predicting control factors may be performed by at least one processor of an information processing system (e.g., the control factor prediction system 120). The method for predicting control factors may begin with receiving one or more facility control factor prediction models trained to predict control factors for a manufacturing facility from a prediction model providing system (S1110).

Then, the processor may execute matching between one selected from the one or more facility control factor prediction models and one selected from a plurality of manufacturing facilities controlled by a facility control system (S1120). Here, the number of the one or more facility control factor prediction models may be less than the number of the plurality of manufacturing facilities, and the processor may execute matching between one selected from the one or more prediction models and one of the plurality of manufacturing facilities according to set or predetermined matching criteria. For example, the set or predetermined criteria may include at least one of associativity of the prediction model with the manufacturing facility, degree of specialization for the manufacturing facility, control priority information of the manufacturing facilities, scheduling information of the manufacturing facilities, regional proximity to the manufacturing facility, or predicted value history information of each of the plurality of prediction models. Here, the predicted value history information of each of the plurality of prediction models may include at least one of control factor predicted value information of each of the prediction models calculated based on the independent factors for a particular manufacturing facility, information on whether the recipe parameter of the particular manufacturing facility is met, or retraining history information.

Then, the processor may receive the independent factor of the selected manufacturing facility from the facility control system (S1130). Here, the processor may receive the independent factor of the selected manufacturing facility from the facility control system using a message-based communication protocol.

Further, the processor may calculate a control factor predicted value based on the independent factor using the selected facility control factor prediction model (S1140). Then, the processor may transmit the calculated control factor predicted value to the facility control system (S1150). Here, the processor may transmit the calculated control factor predicted value to the facility control system using a message-based communication protocol.

Moreover, the processor may determine a recipe parameter of the selected manufacturing facility based on the control factor predicted value by the facility control system, and control the operation of the selected manufacturing facility according to the determined recipe parameter. Further, the processor may determine whether the control factor predicted value calculated by the facility control system satisfies the recipe parameter of the selected manufacturing facility.

The methods described above may be provided as computer programs stored on a computer-readable recording medium for execution on a computer. The medium may continue to store computer-executable programs or temporarily store them for execution or download. Moreover, the medium may be a variety of recording or storage means in the form of a single piece of hardware or a combination of several pieces of hardware, and is not limited to media directly connected to a computer system but may be distributed over a network as well. Examples of media may be those configured to store program instructions, including magnetic media such as hard disks, floppy disks, and magnetic tapes, optical recording media such as CD-ROMs and DVDs, magneto-optical media such as floptical disks, ROM, RAM, flash memory, and/or the like. Moreover, examples of other media may include recording or storage media managed by app stores that distribute applications, sites that supply or distribute various other software, servers, and/or the like.

The methods, operations, or techniques of the present disclosure may be implemented by a variety of means. For example, these techniques may be implemented in hardware, firmware, software, or combinations thereof. Those skilled in the art will appreciate that the various example logic blocks, modules, circuits, and algorithm steps described in connection with the disclosure herein may be implemented in electronic hardware, computer software, or a combination of both. To clearly describe this interchangeability of hardware and software, the various example components, blocks, modules, circuits, and steps have been described above generally in terms of their functionality. Whether such functionality is implemented in hardware or software depends on the particular application and design requirements imposed on the overall system. Those skilled in the art may implement the described functionality in a variety of ways for each particular application, but such implementations should not be construed as departing from the scope of the present disclosure.

In hardware implementations, the processing units used to perform the techniques may be implemented within one or more application-specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computers, or combinations thereof.

Therefore, the various example logic blocks, modules, and circuits described in connection with the present disclosure may be implemented or performed in any combination of general-purpose processors, DSPs, ASICs, FPGAs or other programmable logic devices, discrete gate or transistor logic, discrete hardware components, or those designed to perform the functions described herein. The general-purpose processor may be a microprocessor, but in other examples, the processor may be any suitable processor, controller, microcontroller, or state machine. The processor may also be implemented as a combination of computing devices, for example, a combination of a DSP and a microprocessor, a plurality of microprocessors, one or more microprocessors in conjunction with a DSP core, or any other configurations.

In firmware and/or software implementations, the techniques may be implemented as instructions stored on a computer-readable medium such as random-access memory (RAM), read-only memory (ROM), non-volatile random-access memory (NVRAM), PROM (programmable read-only memory), EPROM (erasable programmable read-only memory), EEPROM (electrically erasable PROM), flash memory, compact discs (CDs), magnetic or optical data storage devices, and/or the like. The instructions may be executable by one or more processors, and may cause the processor(s) to perform certain aspects of the functionality described in the present disclosure.

If implemented in software, the above techniques described above may be stored on or transmitted via a computer-readable medium as one or more instructions or code. The computer-readable media include both computer storage media and communication media, including any medium that facilitates the transmission of a computer program from one place to another. The storage media may be any available media that can be accessed by a computer. By way of non-limiting example, the computer-readable media may include RAM, ROM, EEPROM, CD-ROM or other optical disc storages, magnetic disk storage or other magnetic storage devices, or any other media that can be used to transport or store the desired program code in the form of instructions or data structures and that can be accessed by a computer. Moreover, any access is appropriately or suitably termed a computer-readable medium.

For example, if the software is transmitted from websites, servers, or other remote sources using coaxial cables, fiber optic cables, twisted pair cables, digital subscriber lines (DSLs), or wireless technologies such as infrared, radio, and microwave, then the coaxial cables, fiber optic cables, twisted pair cables, digital subscriber lines, or wireless technologies such as infrared, radio, and microwave are included within the definition of media. The disks and discs used herein include CDs, laser discs, optical discs, digital versatile discs (DVDs), floppy disks, and Blu-ray discs, wherein the disks typically reproduce data magnetically, whereas the discs reproduce data optically using lasers. Combinations of the above should also be included within the scope of computer-readable media.

The software modules may reside in RAM memory, flash memory, ROM memory, EPROM memory, EEPROM memory, registers, a hard disk, a removable disk, a CD-ROM, or any other form of storage medium known. An example storage medium may be connected to the processor such that the processor can read information from or write information to the storage medium. In other examples, the storage medium may be integrated into the processor. The processor and storage medium may be present within an ASIC. The ASIC may be present within the user terminal. In other examples, the processor and storage medium may be present as separate components in the user terminal.

Although the embodiments have been described above as utilizing aspects of the presently disclosed subject matter in one or more standalone computer systems, the present disclosure is not limited thereto but may be implemented in conjunction with any computing environment, such as a network or distributed computing environment. Furthermore, aspects of the subject matter in the present disclosure may be implemented in a plurality of processing chips or devices, and storage may be affected similarly across a plurality of devices. These devices may include PCs, network servers, and portable devices.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure and the claims and their equivalents, below.

### Description of Symbols

100: Secondary battery facility control factor prediction system
110: Prediction model providing system
120: Control factor prediction system
130: Facility control system
140: Manufacturing facility
150: Network

## Claims

1. A system (120) for predicting control factors for a manufacturing facility (140) performed by at least one processor (220), the system (120) comprising:
a model execution management unit (410) configured to execute or manage one or more facility control factor prediction models trained to predict control factors for a manufacturing facility (140), the one or more facility control factor prediction models being received from a prediction model providing system (110);
a storage unit (420) configured to store data associated with the facility control factor prediction models; and
a communication unit (430) configured to receive an independent factor (630) of one of a plurality of manufacturing facilities (140) from a facility control system, and configured to transmit a control factor predicted value calculated by one of the one or more facility control factor prediction models based on the independent factor to the facility control system (130),
wherein the model execution management unit (410) is configured to execute matching between one selected from the one or more facility control factor prediction models and one selected from the plurality of manufacturing facilities, and configured to calculate a control factor predicted value based on an independent factor (630) of the selected manufacturing facility (140) by executing the selected prediction model.

2. The system of claim 1, wherein a number of the one or more prediction models is less than a number of the plurality of manufacturing facilities (140), and
particularly wherein the model execution management unit (410) is configured to execute matching between the one selected from the one or more prediction models and the one selected from the plurality of manufacturing facilities (140) according to a matching criteria.

3. The system of claim 2, wherein the matching criteria comprises at least one of a degree of association of a prediction model with a manufacturing facility (140), a degree of specialization of a prediction model for a manufacturing facility (140), information about a control priority of a manufacturing facility (140), scheduling information of manufacturing facilities (140), or a regional proximity to a manufacturing facility (140).

4. The system of any of claims 1-3, wherein the independent factor (630) comprises at least one of condition derivation start information or basic information of the plurality of manufacturing facilities (140),
particularly wherein the condition derivation start information comprises at least one of facility number information or condition derivation start information, and
particularly wherein the basic information comprises at least one of factory information, a facility number, a recipe identification number, an item code, an item value, or data generation time information.

5. The system of any of claims 1-4, wherein the facility control system (130) comprises:
an advanced process control, APC, server (620) configured to determine a recipe parameter of any one of the plurality of manufacturing facilities (140) based on the control factor predicted value; and
a machine control, MC, server (622) configured to control an operation of one of the plurality of manufacturing facilities (140) according to the recipe parameter.

6. The system of claim 5, wherein the MC server (622) is configured to receive the independent factor (630) from at least one of the plurality of manufacturing facilities (140) and/or transmit the independent factor (630) to the control factor prediction system (120), by using a message-based communication protocol.

7. The system of claim 5 or 6, wherein the APC server (620) is configured to receive the control factor predicted value from the control factor prediction system (120) by using a message-based communication protocol.

8. The system of any of claims 5-7, wherein the APC server (620) is configured to:
determine whether or not the control factor predicted value satisfies a recipe parameter of one of the plurality of manufacturing facilities (140); and
transmit information on whether the control factor predicted value satisfies the recipe parameter to the MC server (622) when the control factor predicted value is determined to satisfy the recipe parameter.

9. The system of claim 8, wherein the APC server (620) is configured to transmit retraining instruction information to the MC server (622) when the control factor predicted value is determined to not satisfy the recipe parameter, and
the MC server (622) is configured to transmit a request for retraining of the prediction model to the control factor prediction system.

10. The system of any of claims 1-9, wherein the prediction model providing system (110) comprises:
a model training unit (310) configured to train the one or more prediction models to predict control factors for a manufacturing facility based on reference data on past recipe parameters of the plurality of manufacturing facilities (140), and process execution results according to the past recipe parameters; and
a model distribution unit (320) configured to distribute the one or more prediction models to the control factor prediction system (120).

11. The system of claim 10, wherein the model distribution unit (320) is configured to distribute the one or more prediction models in a form of a Docker container executable on a virtual machine.

12. The system of claim 10 or 11, wherein the reference data comprises at least one of process standard data, process message data, facility measurement data, or sensor measurement data.

13. A method (1100) of predicting facility control factors performed by at least one processor (220), the method comprising:
receiving (S1110), from a prediction model providing system (110), one or more facility control factor prediction models trained to predict control factors for a manufacturing facility;
executing (S1120) a matching between one selected from the one or more facility control factor prediction models and one selected from a plurality of manufacturing facilities (140) controlled by a facility control system (130);
receiving an independent factor of the selected manufacturing facility from the facility control system (130);
calculating (S1140) a control factor predicted value based on the independent factor by using the selected facility control factor prediction model; and
transmitting (S1150) the control factor predicted value to the facility control system (130).

14. The method as claimed in claim 13, wherein a number of the one or more facility control factor prediction models is less than a number of the plurality of manufacturing facilities, and
particularly wherein the executing of the matching between the one selected from the one or more facility control factor prediction models and the one selected from the plurality of manufacturing facilities controlled by the facility control system comprises:
executing a matching between the one selected from the one or more prediction models and the one selected from the plurality of manufacturing facilities according to a matching criteria,
particularly wherein the matching criteria comprises at least one of a degree of association of a prediction model with a manufacturing facility, a degree of specialization of a prediction model for a manufacturing facility, information about control priority of manufacturing facilities, scheduling information of manufacturing facilities, or a regional proximity to a manufacturing facility,
preferably further comprising:
determining, by the facility control system (130), a recipe parameter of the selected manufacturing facility (140) based on the control factor predicted value; and
controlling, by the facility control system (130), an operation of the selected manufacturing facility (140) according to the recipe parameter,
preferably further comprising:
determining, by the facility control system (130), whether or not the calculated control factor predicted value satisfies the recipe parameter of the selected manufacturing facility (140),
particularly wherein the independent factor of the selected manufacturing facility (140) is received from the facility control system (130) by using a message-based communication protocol,
particularly wherein the calculated control factor predicted value is transmitted to the facility control system by using a message-based communication protocol.

15. A computer-readable medium storing instructions which, when executed by one or more processors, cause the one or more processors to perform the method according to claim 13 or 14.
